# EUROPEAN PATENT APPLICATION

(11) **EP 3 348 507 A1**
(43) Date of publication of application: **18.07.2018**
(21) Application number: 18151744.2
(22) Date of filing: 15.01.2018
(51) Int. Cl.: B66B 1/46, H04W 4/02

(54) **MOBILE DEVICE IDENTIFICATION IN ELEVATOR COMMUNICATION SYSTEM AND METHOD**

(30) Priority: 13.01.2017 US 201715406314
(71) Applicant: Otis Elevator Company, Farmington, Connecticut 06032 (US)
(72) Inventor: The designation of the inventor has not yet been filed
(74) Representative: Dehns

(57) **Abstract**

A communication system includes an operating environment proximate a plurality of elevator car locations. Also included is a Bluetooth Low Energy (BLE) device (306) connectable to a mobile device (208) located within the operating environment, the BLE device (306) being a BLE central communication device and the mobile device (208) being a BLE peripheral communication device, the mobile device (208) advertising a universal unique identifier (UUID) written to memory of the mobile device (208) by the BLE device (306) to establish connection between the mobile device (208) and the BLE device (306).

## Description

### BACKGROUND

Existing elevator systems typically require a user to step into a building lobby and interact with a system kiosk or the like to submit an elevator call (e.g., hall call or destination call). In some cases such as the morning rush hour, large wait times may result due to all patrons using the system kiosk(s). Identification of mobile devices by the system may rely on processes that require substantial connection time and overhead to facilitate such identification, resulting in increased elevator wait times and overall system inefficiencies.

### BRIEF SUMMARY

Disclosed is a communication system including an operating environment proximate a plurality of elevator car locations. Also included is a Bluetooth Low Energy (BLE) device connectable to a mobile device located within the operating environment, the BLE device being a BLE central communication device and the mobile device being a BLE peripheral communication device, the mobile device advertising a universal unique identifier (UUID) written to memory of the mobile device by the BLE device to establish connection between the mobile device and the BLE device. Also disclosed are various preferred features according to one or more of claims 2-8

There is disclosed a method of communication in an elevator operating environment. The method includes receiving a Bluetooth Low Energy (BLE) signal with a mobile device upon entering an operating environment that is proximate a plurality of elevator car locations. The method also includes allowing the mobile device to permit an initial connection to a BLE access point device upon receipt of the BLE signal to request an elevator assignment from the access point device. The method further includes writing a universal unique identifier (UUID) to the mobile device with the BLE access point device during the initial connection. The method yet further includes advertising and functioning the mobile device as a BLE peripheral device with the UUID to initiate connections between the mobile device and the BLE access point device that are subsequent to the initial connection, the BLE access point device being a BLE central communication device. Also disclosed are various preferred features according to one or more of claims 10-15.

### BRIEF DESCRIPTION OF THE DRAWINGS

The present disclosure is illustrated by way of example and not limited in the accompanying figures in which like reference numerals indicate similar elements.
FIG. 1 illustrates an elevator communication system in an example embodiment;
FIG. 2 illustrates a user environment of the elevator communication system;
FIG. 3 schematically represents the elevator communication system; and
FIG. 4 is a flow chart illustrating a method associated with the elevator communication system according to an aspect of the disclosure.

### DETAILED DESCRIPTION

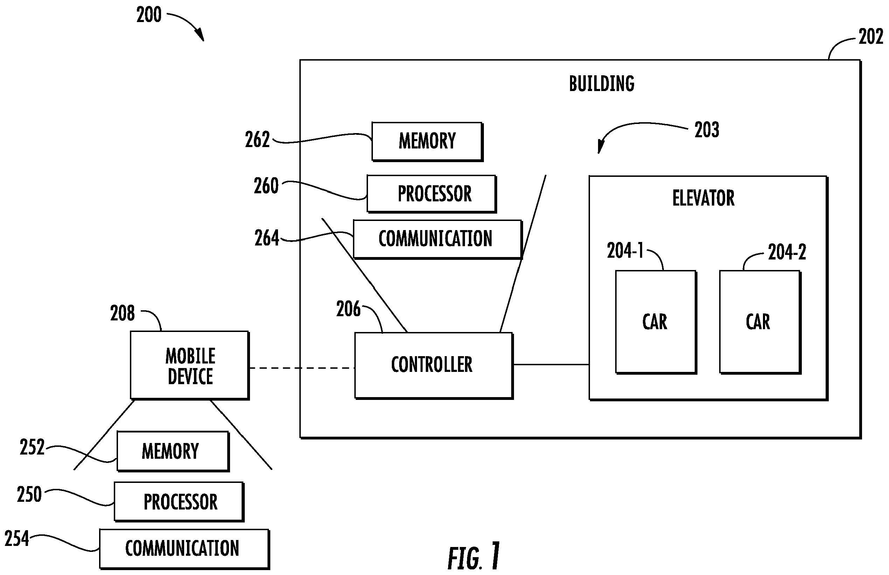

FIG. 1 depicts an elevator communication system 200 in an example embodiment. The elevator communication system 200 includes an elevator system 203 installed at a building 202. In some embodiments, the building 202 may be an office building or a collection of office buildings that may or may not be physically located near each other. The building 202 may include any number of floors. Persons entering the building 202 may enter at a lobby floor, or any other desired floor, and may go to a destination floor via one or more conveyance devices.

The elevator system 203 may include one or more computing devices, such as a controller 206. The controller 206 may be configured to control dispatching operations for one or more elevator cars (e.g., elevator cars 204-1, 204-2) associated with the elevator system 203. It is understood that the elevator system 203 may utilize more than one controller 206, and that each controller may control a group of elevator cars 204-1 and 204-2. Although two elevator cars 204-1 and 204-2 are shown in FIG. 1, it is understood that any number of elevators cars may be used in the elevator system 203. The elevator cars 204-1 and 204-2 may be located in the same hoistway or in different hoistways so as to allow coordination amongst elevator cars 204-1 and 204-2 in different elevator banks serving different floors. It is understood that other components of the elevator system 203 (e.g., drive, counterweight, safeties, etc.) are not depicted for ease of illustration.

Also shown in FIG. 1 is a mobile device 208. The mobile device 208 may include a device that is carried by a person, such as a smart phone, PDA, tablet, etc. The mobile device 208 may include wearable items, such as a smart watch, eyewear, etc. The mobile device 208 may include a processor 250, memory 252 and a communication module 254, as shown in FIG. 1. The processor 250 can be any type or combination of computer processors, such as a microprocessor, microcontroller, digital signal processor, application specific integrated circuit, programmable logic device, and/or field programmable gate array. The memory 252 is an example of a non-transitory computer readable storage medium tangibly embodied in the mobile device 208 including executable instructions stored therein, for instance, as firmware. The communication module 254 may implement one or more communication protocols, but must support a BLE peripheral role, as described in further detail herein.

The controller 206 may include a processor 260, memory 262 and a communication module 264, as shown in FIG. 1. The processor 260 can be any type or combination of computer processors, such as a microprocessor, microcontroller, digital signal processor, application specific integrated circuit, programmable logic device, and/or field programmable gate array. The memory 262 is an example of a non-transitory computer readable storage medium tangibly embodied in the controller 206 including executable instructions stored therein, for instance, as firmware. The communication module 264 may implement one or more communication protocols, but must support BLE communication in a BLE central role, as described in further detail herein.

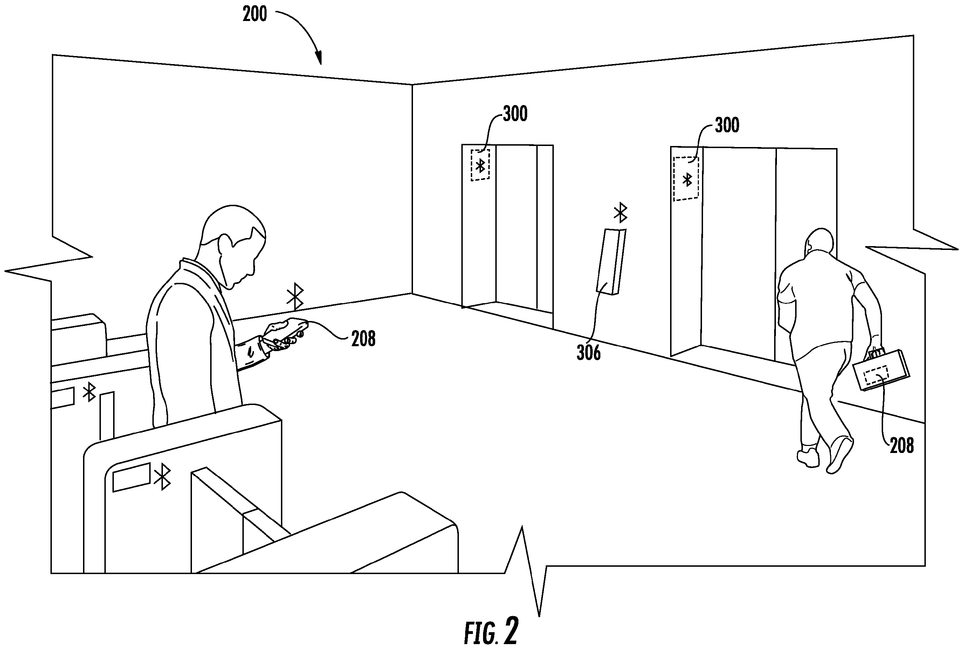

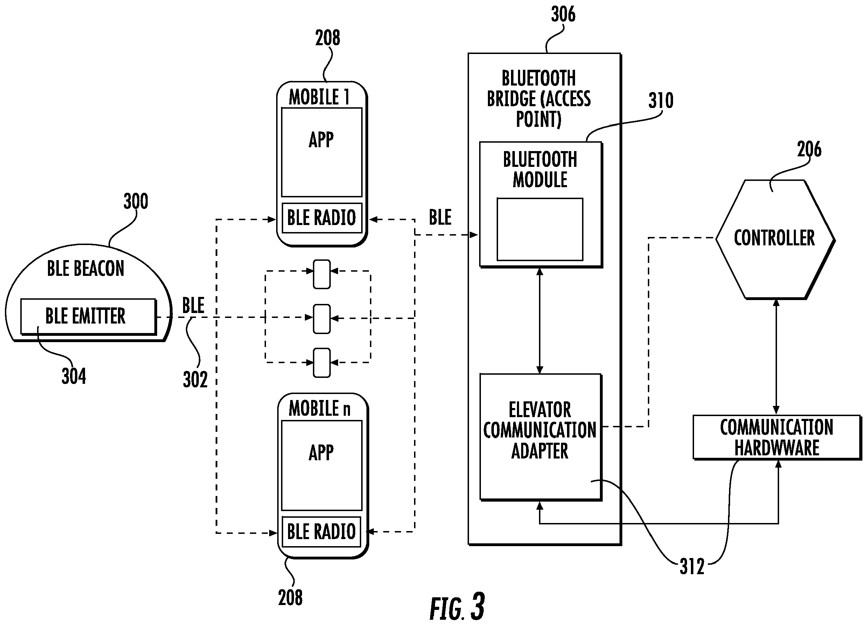

Referring now to FIGS. 2 and 3, an embodiment of the elevator communication system 200 is illustrated according to further aspects of the disclosure. In the illustrated embodiment, the mobile device 208 functions as a BLE peripheral device and one or more devices of the elevator communication system 200 functions as a BLE central device that initiates communication and interaction with the mobile device 208, as will be appreciated from the disclosure herein.

The above-described BLE peripheral device role of the mobile device 208 and the BLE central device(s) role of the elevator communication system 200 are reversed from typical systems. The role reversal of devices in this elevator system is both unique and a fundamental design advantage when deploying such a system in a public environment. If the mobile device 208 were in the central role it would take on the responsibility of managing connection to the system. With the mobile device 208 unable to intercommunicate, and mobile device placement in the lobby being uncontrollable and random, the flow of communication would be chaotic with mobile devices likely all connecting to the same access point device, resulting in unnecessary communication traffic and collisions. In the system 200 disclosed herein, connection and processing of information is made from as many mobile devices as possible, as quickly as possible, via the wireless communication Bluetooth low energy (BLE) with short connection durations for each individual mobile device.

In the illustrated embodiment, at least one, but typically multiple BLE beacon devices 300 (also referred to herein as BLE wireless signal generating devices) are disposed in the system operating environment. Specifically, the BLE beacon devices 300 are located proximate an elevator boarding area. The BLE beacon devices 300 are deployed as separate devices in some embodiments for the purpose of enhancing the ability of the mobile device 208 to detect the presence of the BLE-enabled elevator communication system 200. The BLE beacon devices 300 emit a BLE signal 302 with a BLE emitter 304 that BLE-enabled mobile devices, operating in the usual BLE central mode initially can continuously search for, such as the mobile device 208 described herein, to trigger the mobile device 208 to change their operational mode from BLE central mode to BLE peripheral mode and enter a connection mode with the elevator communication system 200. Upon receipt of the BLE signal 302, the mobile device 208 advertises its presence with an additional BLE signal that is detectable by one or more nearby BLE access point devices 306 that are disposed in the system operating environment. Specifically, the BLE access point devices 306 are located proximate the elevator boarding area. The mobile device can also advertise its presence upon the user opening an application on the mobile device 208, or with the application open the advertising could be set to start only upon the user entering a request within the application on the mobile device 208. The mobile device 208 is connectable to the BLE beacon devices 300 and the BLE access point devices 306 when located proximate the elevator boarding area. In some embodiments, the mobile device 208 is connectable to the components when located within 100 feet, for example. It is to be appreciated that this distance/range is an illustrative range and some embodiments will permit connection with larger or smaller ranges.

One or more BLE access point devices 306 start to connect to the mobile devices advertising with a credential recognizable by the elevator communication system 200, as described herein. Only one BLE access point device 306 will complete the connection to the mobile device 208as the mobile device 208 will indicate that it has connected and prevent other connections from forming. The BLE access point device 306 may also be referred to as a bridge or a suitable alternative. One BLE access point device 306 is capable of handling multiple connections and therefore multiple mobile devices simultaneously. The BLE access point device 306 is part of, or is in operative communication with, the controller 206. It is to be appreciated that the overall system 200 may include a plurality of BLE access point devices 306 spaced from each other to facilitate operation of the system 200 over a desired distance range. In some embodiments, the BLE access point device 306 includes one or more BLE beacon device 300 integrated therein.

The BLE access point device 306 includes a BLE module 310 that receives the BLE signal 302 from the mobile device 208 to establish connection of the mobile device 208 to the BLE access point device 306. Upon connection, the mobile device 208 enters a request for an elevator assignment (i.e., elevator request, elevator call, hall call, destination call, etc.) that is received by the BLE access point device 306. The BLE access point device 306 communicates with the controller 206 in a wired or wireless manner via at least one communication device 312 that is integrated in the BLE access point device 306. A wired and wireless communication arrangement is illustrated for reference, but it is to be appreciated that both are not required in some embodiments. In particular, communication may be established only wirelessly or wired via communication hardware component(s) 312. The controller 206 responds with an elevator assignment for the mobile device 208 user and that assignment is relayed to the mobile device 208 by the BLE access point device 306. After receipt of the assignment, the mobile device 208 is disconnected from the BLE access point device 306. Disconnection may occur automatically by the BLE access point device 306 or may require manual termination by the mobile device 208 user via input on the mobile device 208.

The above-described embodiment of the method provides a single connection (transaction) between the BLE access point device 306 and the mobile device, but it is to be appreciated that the call (e.g., elevator request) and the assignment may be provided over two separate connections. The two connection architecture is advantageous in that the mobile user may be moving while making their elevator request. The first connection may be made through one BLE access point device 306 and they might walk out of range of that first BLE access point device 306 prior to receiving their elevator assignment. In this architecture, after the mobile device 208 enters the request to the original BLE access point device 306 the BLE access point device 306 disconnects from the mobile device 208 and the mobile device starts advertising again with a different signature that it is awaiting an elevator assignment. The elevator communication system 200 sends elevator assignments to all BLE access point devices allowing the second BLE access point device 306 that sees the waiting BLE advertisement to connect to and send the elevator assignment to the waiting mobile device 208.

In operation, the elevator communication system 200 provides users in the operating environment with a seamless and interactive elevator request experience. As shown in FIG. 2, a user simply enters the elevator boarding area with the mobile device 208 and one of the BLE beacon devices 300 triggers the mobile device 208 to enter into a connection mode based on user configuration data previously stored on the mobile device 208. An application on the mobile device 208 stores a list of universal unique identifiers (UUIDs) that are advertised by the BLE beacon device(s) 300. Recognizing one of the advertised UUIDs gives the application context information about the current building and floor. In some embodiments, based off this context and any user preferences stored about desired floor and times of day or days of the week for travel, the application informs the user it will be making a request and then makes a request for the floor on the user's behalf if the response is in the affirmative. In some embodiments, the application detects the floor and building context and makes a preprogramed request. In other words, in some embodiments, the mobile device 208 is pre-commissioned with a digital credential that enables it to communicate with specific BLE access point devices in a specific building. The BLE access point device 306 will communicate over an encrypted BLE channel to the mobile device 208 and authenticate the mobile device 208 based on the credential. The digital credential may also include an access control payload that is communicated along with the elevator request to the BLE access point device 306. The BLE access point device 306 communicates the request and access control payload to the elevator system that verifies with the access control system that the user with the access control payload is authorized to travel to the requested floor. The specific call may be based on a manual input by a user through an interactive application stored on the mobile device 208 in some embodiments. This may be done by physical contact between the user and an interactive surface (e.g., touch screen) of the mobile device 208 or through voice prompt commands. Alternatively, a user may input predetermined settings into the mobile device 208 that represent a floor destination, for example. This is particularly useful for individuals that often utilize the elevator system to travel to a single floor on a regular basis. Upon determination of an elevator assignment by the controller 206, the BLE access point device 306 relays the assignment to the mobile device 208 and it is displayed to the user. The assignment may also be displayed in alternative manners, such as on a watch or a wall display, for example. Traditional elevator systems do not assign users to specific elevators. For this case the message back to the user is a confirmation that their request has been accepted.

Advantageously, the elevator communication system 200 allows a user to step into an elevator boarding area (e.g., lobby) and receive an elevator assignment without interacting with anything other than their mobile device 208 and even then only doing so in a minimalistic fashion. Additionally, backups at system kiosks are reduced, thereby enabling better traffic flow to elevators. Use of the mobile device 208 as a BLE peripheral device, rather than a BLE central device, results in a better flow of communication between the mobile devices and the communication system.

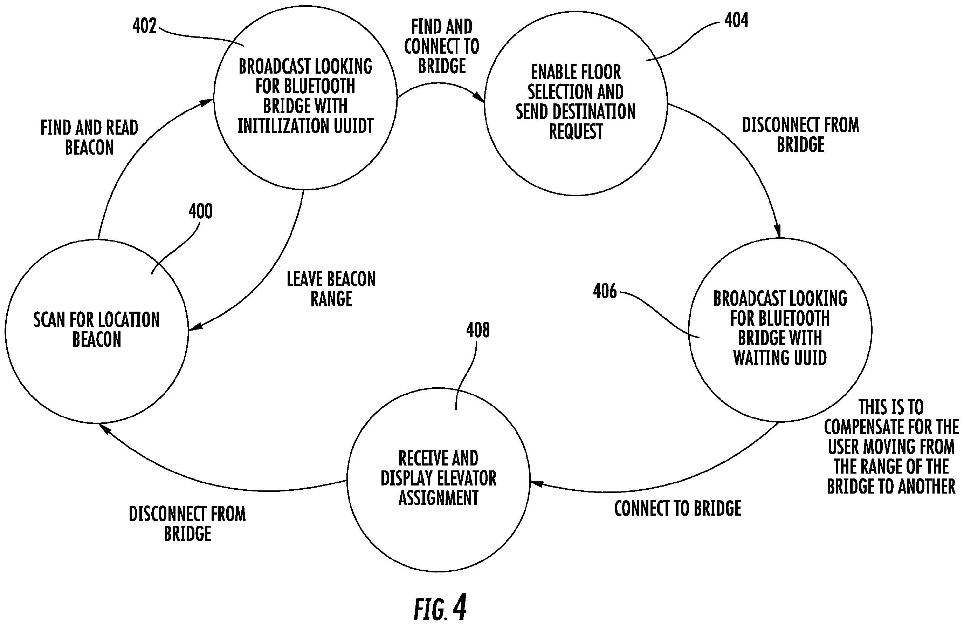

Referring to FIG. 4, the system 200 and method associated therewith are illustrated with a flow diagram. The flow diagram illustrates the method from the mobile device's perspective. The mobile device 208 scans for the BLE signal 302, as represented with 400. If within a predetermined range of the BLE beacon device 300, the BLE signal 302 prompts the mobile device 208 to advertise (i.e., broadcast) as a BLE peripheral, as represented with 402. The advertisement seeks connection with a BLE access point device 306 with an initialization universal unique identifier (UUID) which is the UUID of the implemented BLE service. A connection is established between the mobile device 208 and the BLE access point device 306 and an elevator call is made 404. The BLE access point device 306 writes a UUID to the mobile device 208. The UUID is not associated with an implemented BLE service and comprises an elevator request. Once the elevator call is received by the BLE access point device 306, the connection between the mobile device 208 and the BLE access point device 306 is terminated, but the BLE access point device 306, and any other BLE access point devices 306 of the system 200, stores the UUID therein. The mobile device 208 advertises the UUID that was written by the BLE access point device 306 to seek connection to one of the BLE access point devices of the system 406. Once the system 200 has processed the request associated with the UUID, re-connection is established with the proper mobile device 208 and the elevator assignment is written to the mobile device 408. Upon receipt of the elevator assignment, the mobile device 208 is disconnected from the BLE access point device.

As described above, a UUID is advertised by the mobile device 208 that is acting as the BLE peripheral. A BLE peripheral typically only advertises the UUID of a BLE service it has. A "BLE service" is a defined term in the Bluetooth Specification for BLE. This is used to identify devices of a given type and ensure they have the service necessary to work with the device that is trying to connect to them and is functioning in a BLE central role. In the embodiments described herein, a streamlined connection to a previously connected mobile device (i.e., BLE peripheral device) is provided. A device's advertised MAC address is likely to change between connection encounters with the elevator communication system 200. The MAC address is a unique identifier or address of a device in a network. To address this issue, a property is written on the mobile device 208 by the elevator communication system 200 as a UUID and the mobile device advertises the UUID after the BLE central wrote it. The UUID is not associated with an implemented BLE service and comprises an elevator request, as described above. This streamlines subsequent connections between the mobile device and the BLE access point device 306 by allowing identification of the BLE peripheral to occur through the advertisement rather than through connection and reading of a characteristic. The UUID is stored on the mobile device's memory 252 for subsequent advertising and connection. In some embodiments, the UUID is stored on memory of at least one device of the communication system 200, such as the BLE access point device 306 and/or the controller 206, for example.

Advantageously, this allows the elevator communication system 200 to reduce connection times and overhead by making the identification of a device through the advertisement rather than through connection. The mobile device user benefits from a faster connection and elevator assignment. Additionally, reduced overhead allows the system to be less bogged down and allows elevator assignments to make it out of the queue faster, thereby preventing backups.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments have been described, it is to be understood that aspects of the disclosure may include only some of the described embodiments. Accordingly, the disclosure is not to be seen as limited by the foregoing description, but is only limited by the scope of the appended claims.

## Claims

1. A communication system comprising:
an operating environment proximate a plurality of elevator car locations; and
a Bluetooth Low Energy (BLE) device connectable to a mobile device located within the operating environment, the BLE device being a BLE central communication device and the mobile device being a BLE peripheral communication device, the mobile device advertising a universal unique identifier (UUID) written to memory of the mobile device by the BLE device to establish connection between the mobile device and the BLE device.

2. The communication system of claim 1, wherein the UUID is written to memory of the mobile device during an initial connection between the BLE device and the mobile device, the UUID stored on the memory of the mobile device and on memory of at least one device of the communication system.

3. The communication system of claim 2, wherein the at least one device of the communication system comprises a controller.

4. The communication system of any preceding claim, wherein the BLE device is an access point device located within the operating environment and is connectable to the mobile device.

5. The communication system of claim 4, further comprising a controller in operative communication with the BLE device to determine an elevator assignment to be communicated to the mobile device.

6. The communication system of claim 4 or 5, further comprising a wireless signal generating device emitting a BLE signal to be received by a mobile device located within the operating environment.

7. The communication system of claim 6, wherein the wireless signal generating device is integrated within the access point device.

8. The communication system of claim 6, wherein the wireless signal generating device is one of a plurality of wireless signal generating devices located within the operating environment, the wireless signal generating devices physically separated from the access point device.

9. A method of communication in an elevator operating environment comprising:
receiving a Bluetooth Low Energy (BLE) signal with a mobile device upon entering an operating environment that is proximate a plurality of elevator car locations;
allowing the mobile device to permit an initial connection to a BLE access point device upon receipt of the BLE signal to request an elevator assignment from the access point device;
writing a universal unique identifier (UUID) to the mobile device with the BLE access point device during the initial connection; and
advertising and functioning the mobile device as a BLE peripheral device with the UUID to initiate connections between the mobile device and the BLE access point device that are subsequent to the initial connection, the BLE access point device being a BLE central communication device.

10. The method of claim 9, further comprising a user initiating an elevator call with the mobile device, wherein initiation of the elevator call allows a connection of the mobile device and one of the BLE access point devices.

11. The method of claim 9, further comprising a user initiating an elevator call with the mobile device upon connection to the access point device.

12. The method of claim 10 or 11, wherein the elevator call is a hall call, or wherein the elevator call is a destination call.

13. The method of claim 10, 11 or 12, wherein the user initiates the elevator call by interacting with the mobile device.

14. The method of claim 10, 11 or 12 wherein the user initiates the elevator call by inputting predetermined settings into the mobile device.

15. The method of any of claims 9-14, further comprising communicating between the access point device and a controller to determine the elevator assignment.
